# EUROPEAN PATENT APPLICATION

(11) **EP 2 416 202 A1**
(43) Date of publication of application: **08.02.2012**
(21) Application number: 10758079.7
(22) Date of filing: 02.02.2010
(51) Int. Cl.: G02B 27/64

(54) **DEVICE FOR STABILIZING A LIGHT BEAM OR IMAGES**

(30) Priority: 31.03.2009 ES 200900940
(71) Applicant: Valles Navarro, Alfredo, 08940 Cornellá de Llobregat (Barcelona) (ES); Vallés Navarro, Andrés, 08940 Cornella de LLobregat (Barcelona) (ES)
(72) Inventor: Valles Navarro, Alfredo, 08940 Cornellá de Llobregat (Barcelona) (ES); Vallés Navarro, Andrés, 08940 Cornella de LLobregat (Barcelona) (ES)
(74) Representative: Canela Giménez, Teresa
(86) International application number: PCT/ES2010/000040
(87) International publication number: WO 2010/112631

(57) **Abstract**

Device for stabilizing a light beam or images of the type that can be used to stabilize film cameras or light beam emitters, such as a laser emitter or a pulsed laser beam emitter, which includes means for detecting movements in several axes, means for coding the latter and driving means for correcting the unwanted movements of the object to be stabilized (1), in which a stabilized mirror (4) is arranged, upon which the light beam (2) falls, which light beam related the object to be stabilized (1) to the lens captured or emitted by said light beam (2); said device includes a base with a hollow-shaft pan motor (3) which allows said light beam (2) to pass.

## Description

### FIELD OF THE INVENTION

The present invention develops a device for stabilizing light beams or images, for instance for a laser emitter, an image-receiving camera, wherein said mechanism has been dissociated from the object to be stabilized and incorporates both the control and access means to a power supply external to the device.

### PRIOR ART

Numerous systems and devices intended to stabilize objects are known. In essence these devices comprise means for detecting movement of the object to be stabilized and driving means whose purpose is correcting said movements.

In the field of optics and specifically in the field of the stabilization of film cameras or light beam emitters, the goal, once the point at which said receiving camera or said light beam is to be aimed has been determined, is to provide means for correcting the vibrations, shaking or movements of the supporting means of said emitter or camera, as appropriate, relative to the Pan and Tilt axes mainly.

The problem posed by the known art is that already existing stabilizers are intended to anticipate the weight of the object to be stabilized such that all the stabilization parameters are contingent upon both said weight and size of the stabilized object.

The main object of the present invention is to provide a stabilizer for film cameras, laser emitters, pulsed laser beam emitters, or light beam emitters, having fixed dimensions and weights that are unrelated to the object to be stabilized.

These and other advantages of the present invention will become more apparent throughout the appended description thereof.

### BRIEF DESCRIPTION OF THE INVENTION

Device for stabilizing light beams or images of the type suitable for laser emitters, light beam emitters or the reception of images, provided with means for detecting movements in several axes, coders for the latter and driving means for correcting the unwanted movements of the object to be stabilized, wherein said light beam is aimed at a movable mirror supported on a structure having several degrees of freedom, motorized actuators for performing mirror movements at the respective axes, coders for said movements and gyroscopic mechanisms for detecting the unwanted movements of said axes.

The light beam passes through a hollow motor and becomes reflected on the mirror. The electric connections and the control circuitry of the different elements of the device rest on brushes that permit contact with movement of the parts in an unlimited 360° arc.

The assembly is enclosed in a transparent glass sphere for protection thereof against dust, air, water, etc.

### BRIEF DESCRIPTION OF THE DRAWING

For a better understanding of the invention it is accompanied by one sheet of merely illustrative and nonlimiting drawings.

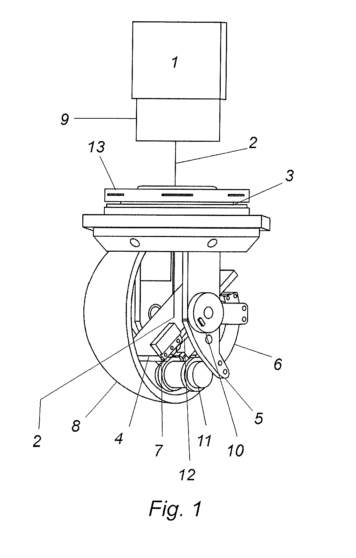

Figure 1 is a diagrammatic representation of the device in accordance with the present invention wherein part of the glass sphere has been removed thereby it showing the different elements participating in the device.

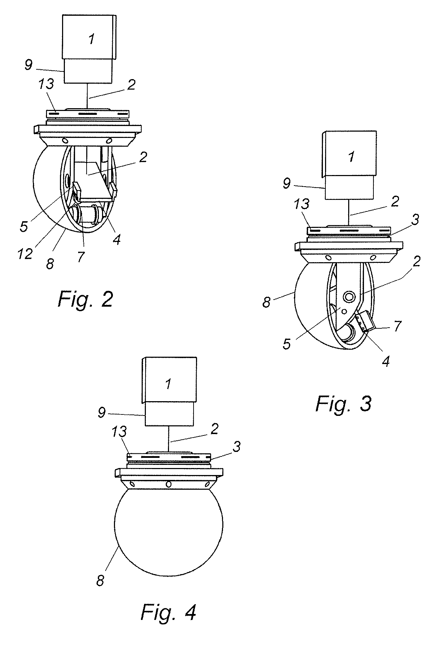

Figures 2 and 3 are other representations of the device shown in figure 1, with the glass sphere sectioned as well so as to permit seeing the interior thereof, it displaying different side positions or mirror positions in order to more clearly appreciate, in each case, the different elements forming it.
Figure 4 is another representation of the embodiment of the previous figures wherein the device is fitted with the protective transparent sphere thereof.

### DETAILED EXPLANATION OF THE INVENTION

The present invention consists of a device for stabilizing a light beam or images, of the type suitable for light beam emitters or the reception of images, laser emitters, pulsed laser beam emitters, it being provided with means for detecting movements in several axes, coders for the latter and driving means for correcting the unwanted movements of the object (1) to be stabilized, wherein said light beam (2) is aimed at a movable mirror (4).

The movable mirror (4), of approximately triangular shape, is a surface that is stabilized against movements. It is swingingly supported on a support (5) that incorporates a coder (10) for the Tilt movement axis of the mirror (4).

The movable assembly, that includes the mirror (4), also incorporates counterweight sets (7) for facilitating the stability of the movements thereof. Movement of the Tilt axis is governed by a motor (6) of said axis, the information received from a Tilt stabilizing gyroscope (10) being included in the control means of the actuators on said Tilt movement.

This assembly is mounted on a base having freedom of movement on the PAN axis, said movements being provided by a hollow-shaft Pan motor (3). That is possible because said mechanism offers room or the inner hollow-shaft for passage of the light beam, either of the emitting or the receiving type, between the camera or emitting apparatus (1) and said stabilizing mirror (4), said passage permitting the Pan rotary movement of the stabilizer.

The invention permits an unlimited 360° Pan movement. Said movement is then possible, there being maintained at the same time the electric connection functions of the stabilizer with the exterior as well as the passage of the corresponding connections to the control means of the actuators of said stabilizer, thanks to a set of brushes, not shown, known in the prior art.

It could also be used any other means for performing said transmission of data and commands, such as wireless transmission, without it affecting the essence of the invention.

The preferred embodiment utilizes conventional gyroscopes for the movement detection that is necessary for the stabilization. It is within the scope of the invention any other means for detecting movements that is either fitting in terms of implementation costs and efficiency of the outcome or that is already known or any future evolution thereof inasmuch as they are being utilized in the present invention despite not being explicitly claimed therein. For instance, gyroscopes made of optical fiber, laser ring gyroscopes, quantum gyroscopes, etc.

In said Pan mechanism it is included the corresponding coder (13) therefor. In the drawings of the above-described preferred embodiment the Pan stabilizing gyroscope element (12) is associated to the support (5) of said mirror (4).

The stabilizing assembly is enclosed within a transparent sphere (8) for protecting it from the external elements that might affect the functioning thereof: dust, air, water, etc.

In this way the invention provides a device for stabilization of fixed dimensions and size that can be coupled to a camera or filming device, a light-emitting apparatus, for instance a laser emitter, and that can produce the stabilization thereof, said device being disassociated from the apparatus to be stabilized and being thus independent of the size and weight thereof.

In another embodiment, said laser emitter can be for instance a pulsed laser beam emitter used in the detection of distances and positions such that the device of the invention can be utilized in the stabilization of said type of apparatus.

It is understood that finish or shape details in the present case are liable to variation provided that the essence of the invention is not altered.

## Claims

1. DEVICE FOR STABILIZING A LIGHT BEAM OR IMAGES, of the type that can be used to stabilize film cameras or light beam emitters, such as laser emitters, pulsed laser beam emitters including means for detecting movements in several axes, coders for the latter and driving means for correcting the unwanted movements of the object to be stabilized (1) **CHARACTERIZED in that**
- it comprises a stabilized mirror (4) upon which the light beam (2) falls for connecting the object to be stabilized (1) with the target, either received or emitted, by said light beam (2);
- it is provided with said stabilized mirror (4) that is supported on a support (5) capable of moving said mirror (4) on the TILT axis, there being provided a motor (6) for said TILT axis, means for detection of movement through gyroscopes (11) that stabilize said TILT movement and coders (10) for said movement;
- the aforesaid assembly is mounted on a base having 360° freedom of movement on the PAN axis and includes a hollow-shaft PAN motor (3) that permits the passage of said light beam (2); it also being provided with a coder (13) therefor and a PAN-stabilizing gyroscope (12).

2. DEVICE FOR STABILIZING A LIGHT BEAM OR IMAGES, according to the previous claim, **CHARACTERIZED in that** said assembly of said stabilized mirror (4) incorporates a set of counterweights (7) of said mirror (4).

3. DEVICE FOR STABILIZING A LIGHT BEAM OR IMAGES, according to the previous claims, **CHARACTERIZED in that** said Pan-stabilizing gyroscope element (12) is associated to the support (5) of said mirror (4).

4. DEVICE FOR STABILIZING A LIGHT BEAM OR IMAGES, according to the previous claims, **CHARACTERIZED in that** the electric connection functions of the stabilizing device with the exterior as well as the passage of the corresponding connections to the control means of the actuators of said stabilizer are performed thanks to a set of brushes.

5. DEVICE FOR STABILIZING A LIGHT BEAM OR IMAGES, according to the previous claims, **CHARACERIZED in that** said stabilizing device is enclosed within a transparent sphere (8).
